# EUROPÄISCHE PATENTANMELDUNG

(11) **EP 1 881 662 A1**
(43) Veröffentlichungstag der Anmeldung: **23.01.2008**
(21) Anmeldenummer: 06014921.8
(22) Anmeldetag: 18.07.2006
(51) Int. Cl.: H04L 27/26, H04L 5/06, H04L 5/02, H04L 25/03

(54) **Filtereinstellung abhängig von Nachbarbandbelegung**

(71) Anmelder: SIEMENS AKTIENGESELLSCHAFT, 80333 München (DE)
(72) Erfinder: Michel, Jürgen, Dr., 81737 München (DE); Raaf, Bernhard, 82061 Neuried (DE)

(57) **Zusammenfassung**

Die Erfindung betrifft ein Verfahren zur Kommunikation per Funk, bei dem ein in eine Mehrzahl von Subbändern aufgeteiltes Frequenzband verwendet wird. Subbänder sind von Funkstationen (NodeB, UE) zur Versendung von Signalen belegt. Eine Funkstation (NodeB, UE) führt vor der Versendung eines Signals eine Filterung unter Verwendung einer Filterfunktion durch und versendet das Signal auf mindestens einem Subband. Erfindungsgemäß hängt ein Parameter der Filterfunktion von der Belegung von mindestens einem dem mindestens einen Subband benachbarten Subband ab. Weiterhin betrifft die Erfindung eine Funkstation (NodeB, UE) zur Durchführung des Verfahrens.

## Beschreibung

Die Erfindung betrifft ein Verfahren zur Kommunikation per Funk, bei dem ein in eine Mehrzahl von Subbändern aufgeteiltes Frequenzband verwendet wird.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Funkstation übertragen. Bei den Funkstationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Derzeitige Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Ein weiteres Beispiel stellen Breitbandnetze mit drahtlosem Zugang beispielsweise gemäß IEEE 802.16 dar. Zukünftige Mobilfunkkommunikationssysteme können z.B. Weiterentwicklungen von UMTS, als LTE (Long Term Evolution) bezeichnet, oder Systeme der vierten Generation, sowie Ad-hoc-Netze sein. Außer weiträumig organisierten (supralokalen) zellularen, hierarchischen Funknetzen existieren drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Um eine möglichst effiziente Übertragung von Daten zu erreichen, kann man das gesamte zur Verfügung stehende Frequenzband in mehrere Subbänder (Multicarrier- bzw. Mehrträgerverfahren) zerlegen. Die den Mehrträgersystemen zugrunde liegende Idee ist es, das Ausgangsproblem der Übertragung eines breitbandigen Signals in die Übertragung mehrerer schmalbandiger Signale zu überführen. Dies hat unter anderem den Vorteil, dass die am Empfänger erforderliche Komplexität reduziert werden kann. Ferner ermöglicht die Aufteilung der verfügbaren Bandbreite in mehrere schmalbandige Subbänder eine deutlich höhere Granularität der Datenübertragung hinsichtlich der Verteilung der zu übertragenden Daten auf die unterschiedlichen Subbänder, d.h. die Funkressourcen können mit einer großen Feinheit auf die zu übertragenden Daten bzw. auf die Teilnehmerstationen verteilt werden. Insbesondere bei Übertragungen mit variabler Datenrate oder bei burstartigem Datenverkehr kann die verfügbare Bandbreite durch die Zuweisung einer Anzahl von Subbändern an unterschiedliche Teilnehmerstationen effizient ausgenutzt werden. Ein Beispiel für ein Mehrträgerübertragungsverfahren ist OFDM (Orthogonal Frequency Division Multiplexing), bei welchem für die Subbänder zeitlich annähernd rechteckige Pulsformen verwendet werden.

Der Erfindung liegt die Aufgabe zugrunde, ein effizientes Verfahren zur Kommunikation per Funk vorzustellen, bei dem ein in eine Mehrzahl von Subbändern aufgeteiltes Frequenzband verwendet wird. Weiterhin soll eine Funkstation zur Durchführung des Verfahrens vorgestellt werden.

Diese Aufgabe wird durch ein Verfahren mit den Merkmalen des Anspruchs 1, sowie durch eine Funkstation mit Merkmalen eines nebengeordneten Anspruchs gelöst. Vorteilhafte Ausgestaltungen und Weiterbildungen sind Gegenstand von Unteransprüchen.

Bei dem erfindungsgemäßen Verfahren zur Kommunikation per Funk wird ein in eine Mehrzahl von Subbändern aufgeteiltes Frequenzband verwendet. Subbänder sind benachbart, wenn sie im Frequenzbereich direkt aufeinander folgen, d.h. wenn zwischen ihnen kein anderes Subband angeordnet ist. Subbänder sind von Funkstationen zur Versendung von Signalen belegt. Eine Funkstation führt vor der Versendung eines Signals eine Filterung unter Verwendung einer Filterfunktion durch und versendet das Signal auf mindestens einem Subband. Erfindungsgemäß hängt ein Parameter der Filterfunktion von der Belegung von mindestens einem dem mindestens einen Subband benachbarten Subband ab. Diese Abhängigkeit kann sich z.B. so auswirken, dass der Wert des Parameters in Abhängigkeit von der Belegung gewählt und verwendet wird, oder dass der Parameter in Abhängigkeit von der Belegung eingesetzt wird oder nicht. Neben der Abhängigkeit von der Belegung des mindestens einen benachbarten Subbandes können weitere Abhängigkeiten bestehen, z.B. eine Abhängigkeit von der Belegung eines anderen Subbandes, insbesondere von der Belegung eines dem mindestens einen benachbarten Subband benachbarten Subbandes.

Bei dem Filter, welchen die Funkstation einsetzt, kann es sich um einen Filter im Zeitbereich oder im Frequenzbereich handeln. Entsprechend kann die Filterfunktion einen Filterkurvenverlauf aufgetragen gegen die Zeit oder aufgetragen gegen die Frequenz angeben. Nach der Filterung versendet die Funkstation das Signal. Diese Versendung kann unter Verwendung eines einzelnen Subbandes, unter Verwendung einer Mehrzahl einzelner Subbänder, oder unter Verwendung einer Mehrzahl benachbarter im Frequenzbereich zusammenhängender Subbänder, d.h. eines Blockes von Subbändern, erfolgen.

Vor der Versendung des Signals wird eine Entscheidung betreffend den für die Filterung des zu versendenden Signals zu verwendenden Parameter der Filterfunktion getroffen. Diese Entscheidung und somit der Parameter hängt von der Belegung von mindestens einem dem mindestens einen Subband benachbarten Subband ab. Um die Entscheidung treffen zu können, muss somit geprüft werden, ob das mindestens eine benachbarte Subband belegt ist oder ob es nicht belegt ist. Die Prüfung und die Entscheidung kann durch die Funkstation erfolgen oder durch eine andere Einrichtung, welche der Funkstation die Belegung / Nicht-Belegung und/oder den zu verwendenden Parameter mitteilen kann. Zur Ermittlung des Belegungszustandes des mindestens einen benachbarten Subbandes können verschiedene Verfahren zum Einsatz kommen.

Ein Subband ist belegt, wenn es von einer Funkstation aktuell zur Versendung eines Signals eingesetzt wird. Weiterhin kann eine Belegung eines Subbandes auch dadurch zustande kommen, dass das jeweilige Subband einer Funkstation aktuell zur Versendung von Signalen zugewiesen ist, so dass diese Funkstation berechtigt ist, das Subband zur Versendung zu verwenden. Unter aktuell ist hierbei vorzugsweise der Zeitpunkt oder die Zeitspanne der Versendung des Signals durch die Funkstation zu verstehen. Vorzugsweise wird ein Subband im Zusammenhang mit der Ermittlung des von der Funkstation zu verwendenden Parameters nur dann als belegt angesehen, wenn die Belegung in einer bestimmen, den Ort der Funkstation umfassenden Region, gegeben ist, wie z.B. in einer Funkzelle, in welcher sich die Funkstation befindet.

In Weiterbildung der Erfindung bestimmt der Parameter die Frequenzbereichs-Filterbandbreite. Insbesondere kann es sich bei dem Parameter um den oftmals mit α bezeichneten Roll-Off-Faktor handeln. Dass der Parameter die Frequenzbereichs-Filterbandbreite bestimmt, bedeutet, dass durch eine Änderung des Parameters die Frequenzbereichs-Filterbandbreite verändert werden kann. Es ist möglich, dass zusätzliche Parameter existieren, welche auch die Frequenzbereichs-Filterbandbreite bestimmen.

In Ausgestaltung der Erfindung wird im Falle der Belegung des mindestens einen benachbarten Subbandes eine kleinere Frequenzbereichs-Filterbandbreite verwendet als im Falle der Nicht-Belegung. Es können z.B. zwei diskrete Werte für den Parameter vorgegeben sein, wobei der der kleineren Frequenzbereichs-Filterbandbreite entsprechende Wert bei Belegung und der der größeren Frequenzbereichs-Filterbandbreite entsprechende Wert bei Nicht-Belegung zum Einsatz kommt.

Besonders vorteilhaft ist es, wenn im Falle der Belegung des mindestens einen benachbarten Subbandes durch den Parameter eine solche Frequenzbereichs-Filterbandbreite bestimmt wird, dass das Signal nicht unter Verwendung von Teilen des mindestens einen benachbarten Subbandes versendet wird. Dies bedeutet, dass dann, wenn ein benachbartes Subband belegt ist, das Signal nicht in dieses benachbarte Subband hineinragt. Vielmehr wird das Signal unter Verwendung des mindestens einen Subbandes, gegebenenfalls hineinragend in ein anderes benachbartes Subband, versendet. Weiterhin ist es vorteilhaft, wenn im Falle der Nicht-Belegung des mindestens einen benachbarten Subbandes durch den Parameter eine solche Frequenzbereichs-Filterbandbreite bestimmt wird, dass das Signal nicht unter Verwendung von Teilen des mindestens einen benachbarten Subbandes versendet wird. Dies bedeutet, dass dann, wenn ein benachbartes Subband nicht belegt ist, das Signal in dieses benachbarte Subband hineinragt. Existieren zwei benachbarte Subbänder, so kann für ein erstes der beiden wie im Falle der Belegung beschrieben vorgegangen werden, und für ein zweites wie im Falle der Nicht-Belegung beschrieben.

In Ausgestaltung der Erfindung hängt der Parameter ab von der Belegung des mindestens einen dem mindestens einen Subband benachbarten Subbandes durch mindestens eine andere Funkstation. Dieses Vorgehen eignet sich insbesondere für den Fall, dass das Signal in Aufwärtsrichtung, d.h. von einer Teilnehmerstation zu einer netzseitigen Funkstation versendet wird. Bei der mindestens einen anderen Funkstation handelt es sich in diesem Fall vorzugsweise auch um eine Teilnehmerstation. Die Abhängigkeit der Filterung kann bei dieser Ausgestaltung der Erfindung dazu dienen, die Interferenz zwischen Signalen verschiedener Sender zu vermindern. Alternativ kann der Parameter abhängen von der Belegung des mindestens einen dem mindestens einen Subband benachbarten Subbandes durch die Funkstation. Dieses Vorgehen eignet sich insbesondere für den Fall, dass das Signal in Abwärtsrichtung, d.h. von einer netzseitigen Funkstation zu einer Teilnehmerstation versendet wird. Die Abhängigkeit der Filterung kann in diesem Fall dazu dienen, die Interferenz zwischen Signalen eines Senders zu vermindern, welche an verschiedene Empfänger ausgestrahlt werden.

In Weiterbildung der Erfindung empfängt die Funkstation vor der Durchführung der Filterung Informationen betreffend die Belegung des mindestens einen Subbandes. Diese Informationen können von der Funkstation dazu verwendet werden, den zu verwendenden Parameter zu ermitteln. Insbesondere ist es möglich, dass die Informationen eine Zuweisung des mindestens einen benachbarten Subbandes an zumindest eine andere Funkstation betreffen. Eine Zuweisung eines Subbandes an eine Funkstation bedeutet in diesem Fall, dass dieses Subband von der jeweiligen von der Zuweisung betroffenen Funkstation belegt ist. Vorzugsweise sind die Informationen betreffend die Zuweisung des mindestens einen benachbarten Subbandes an die zumindest eine andere Funkstation gemeinsam kodiert mit Informationen betreffend eine Zuweisung des mindestens einen Subbandes an die Funkstation. Auf diese Weise muss die Funkstation, um die ihr zugewiesenen Funkressourcen zu ermitteln, auch eine nicht sie betreffende Funkressourcenzuweisung dekodieren.

Einer bevorzugten Weiterbildung der Erfindung gemäß unterscheidet sich aufgrund der Abhängigkeit des Parameters der Verlauf der Filterfunktion an einem Frequenzrand des mindestens einen Subbandes von dem Verlauf der Filterfunktion an einem anderen Frequenzrand des mindestens einen Subbandes. Handelt es sich bei dem mindestens einen Subband um ein einzelnes Subband, so ist es hierdurch möglich, dass der Verlauf der Filterfunktion am linken Rand anders ist als derjenige am rechten Rand des einzelnen Subbandes. Entsprechendes gilt, wenn es sich bei dem mindestens einen Subband um mehrere benachbarte zusammenhängende Subbänder, somit um einen Block aus Subbändern, handelt: es ist möglich, dass der Verlauf der Filterfunktion am linken Rand des linksten Subbandes anders ist als derjenige am rechten Rand des rechtesten Subbandes. Handelt es sich bei dem mindestens einen Subband um eine Mehrzahl einzelner Subbänder, so können eines oder mehrere Subbänder existieren, bei welchem oder welchen der Verlauf jeweils am linken und am rechten Rand der gleiche ist, und/oder eines oder mehrere Subbänder, bei welchem oder welchen jeweils der Verlauf am linken Rand unterschiedlich vom Verlauf am rechten Rand ist.

Besonders vorteilhaft ist es, wenn eine Veränderung des Parameters in einer Veränderung des Verhältnisses der Spitzensendeleistung der Funkstation zur durchschnittlichen Sendeleistung der Funkstation resultiert. Hierdurch kann durch Veränderung des Parameters die Größe PAPR (Peak to Average Power Ratio) beeinflusst werden.

Bei der Funkstation kann es sich um eine teilnehmerseitige Funkstation handeln. Die Signalversendung kann in diesem Fall an eine netzseitige Funkstation oder direkt an eine andere teilnehmerseitige Funkstation erfolgen. Alternativ kann es sich bei der Funkstation um eine netzseitige Funkstation handeln. Die Signalversendung kann in diesem Fall an eine teilnehmerseitige Funkstation erfolgen.

Besonders vorteilhaft ist die Ausgestaltung des Filters als Root Raised Cosine Filter.

Die erfindungsgemäße Funkstation weist Mittel auf zum Kommunizieren per Funk unter Verwendung eines in eine Mehrzahl von Subbändern aufgeteilten Frequenzbandes, sowie Mittel zum Belegen von Subbändern zur Versendung von Signalen, Mittel zum Durchführen vor der Versendung eines Signals einer Filterung unter Verwendung einer Filterfunktion, Mittel zum Versenden des Signals auf mindestens einem Subband, und Mittel zum Verwenden eines Parameters der Filterfunktion abhängig von der Belegung von mindestens einem dem mindestens einen Subband benachbarten Subband.

Die erfindungsgemäße Funkstation eignet sich insbesondere zur Durchführung des erfindungsgemäßen Verfahrens, wobei dies auch auf die Ausgestaltungen und Weiterbildungen zutreffen kann. Hierzu kann sie weitere geeignete Mittel umfassen.

Im folgenden wird die Erfindung anhand eines Ausführungsbeispiels näher erläutert. Dabei zeigen:
- Figur 1:: einen Ausschnitt aus einem Funkkommunikationssystem,
- Figur 2:: verschiedene Filterfunktionskurven.

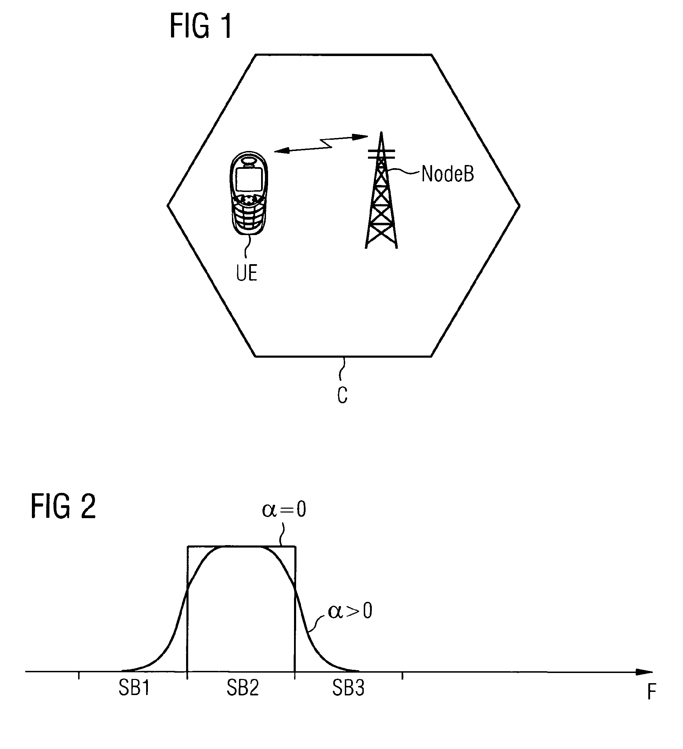

Der in Figur 1 dargestellte Ausschnitt aus einem Funkkommunikationssystem zeigt die Funkzelle C der netzseitigen Funkstation NodeB. Die netzseitige Funkstation NodeB kommuniziert innerhalb ihrer Funkzelle C mit Teilnehmerstationen, wie z.B. mit der in Figur 1 dargestellten Teilnehmerstation UE. Bei der Teilnehmerstation UE kann es sich um eine mobile oder stationäre Funkstation handeln, wie z.B. um ein Mobiltelefon oder einen Computer. Weitere netzseitige Infrastruktur-Einrichtungen, an welche die netzseitige Funkstation NodeB angeschlossen ist, sowie gegebenenfalls vorhandene weitere Funkzellen und Teilnehmerstationen sind aus Gründen der Übersichtlichkeit nicht in Figur 1 dargestellt.

Die Erfindung ist auf verschiedene Arten von Funkkommunikationssystemen anwendbar, so kann es sich bei der netzseitigen Funkstation NodeB z.B. um eine Funkstation eines zellularen oder eines lokalen Systems handeln. Als konkretes Beispiel wird im folgenden ein System gemäß einer Weiterentwicklung von UMTS, als 3G LTE (3rd Generation Long Term Evolution) bezeichnet, betrachtet.

Die Teilnehmerstation UE kann mit der netzseitigen Funkstation NodeB in Aufwärtsrichtung, d.h. durch Nachrichtenversendungen von der Teilnehmerstation UE an die netzseitige Funkstation NodeB, kommunizieren, und/oder in Abwärtsrichtung, d.h. durch Nachrichtenversendungen von der netzseitigen Funkstation NodeB an die Teilnehmerstation UE. Die Erfindung ist sowohl auf die Aufwärtsrichtung als auch auf die Abwärtsrichtung anwendbar. Als konkretes Beispiel wird im folgenden eine Kommunikation zwischen der Teilnehmerstation UE und der netzseitigen Funkstation NodeB in Aufwärtsrichtung betrachtet. Für diese Kommunikation zwischen der netzseitigen Funkstation NodeB und der Teilnehmerstation UE wird ein in Subbänder unterteiltes Frequenzband verwendet. Figur 2 zeigt einen Ausschnitt aus diesem Frequenzband, umfassend die Subbänder SB1, SB2 und SB3, wobei die Frequenz F nach rechts aufgetragen ist. Bei der Übertragung von Signalen auf den Subbändern kann z.B. OFDMA oder SC-FDMA (Single Carrier FDMA) zum Einsatz kommen.

Senderseitig wird ein Filter eingesetzt. Im folgenden wird unter dem Begriff der Filterfunktion eine Funktion verstanden, welche den Verlauf der abgestrahlten Signalleistung über die Frequenz bestimmt (englisch: Pulsshaping bzw. Pulsshaping-Filter), die folgende Beschreibung bezieht sich somit auf die Frequenzdomäne. Natürlich kann durch eine Fouriertransformation eine Frequenzbereichs-Filterfunktion in eine Zeitbereichs-Filterfunktion transformiert werden, so dass die in Bezug auf den Frequenzbereich getroffenen Aussagen entsprechend auf den Zeitbereich angewandt werden können.

Besonders vorteilhaft ist die Verwendung eines Root Raised Cosine (RRC Filter) oder eines Kaiser Filters, beschrieben z.B. in der Technischen Spezifikation 3GPP TS 25.101 (3rd Generation Partnership Project; Technical Specification Group Radio Access Network; User Equipment (UE) radio transmission and reception (FDD)), Kapitel 6.8.1. Diese Filter werden in der Regel mit Hilfe von digitalen Filtern wie z.B. FIR (Finite Impulse Response) Filtern aufgebaut. Der Einsatz von Filtern eignet sich, da durch ihre Verwendung das PAPR (Peak to Average Power Ratio) reduziert werden kann. Dieser Effekt der PAPR Reduktion wird erläutert z.B. in
o 3GPP TSG-RAN WG1 #44 R1-060470 Denver, USA Feb 13th - 17th, 2006, Qualcomm Europe: "PAR Reduction through Frequency Domain Spectrum Shaping"
o 3GPP TSG-RAN WG1 #44 R1-060669 Denver, USA Feb 13th - 17th, 2006, Siemens: "SC-FDMA PAPR Reduction"
o 3GPP TSG-RAN WG1 #44 R1-060318 Denver, USA Feb 13th - 17th, 2006, NTT DoCoMo: "Optimum Roll-off Factor for DFT-Spread OFDM Based SC-FDMA in Uplink".

Die Größe PAPR gibt das Verhältnis der Spitzensendeleistung der Teilnehmerstation UE zu ihrer Durchschnittssendeleistung an. Diese Größe ist insbesondere für die Übertragung in Aufwärtsrichtung relevant. Denn in Aufwärtsrichtung ist die erzielbare Datenrate - bzw. bei gegebener Datenrate die Reichweite - üblicherweise durch die Leistungsfähigkeit des Sendeverstärkers begrenzt. Hierbei ist nicht die durchschnittliche Leistung der begrenzende Faktor, sondern die Spitzenleistung. Denn der Verstärker muss in der Lage sein, eine bestimmte vorgegebene Spitzenleistung hervorzubringen. Je größer daher das PAPR ist, desto geringer ist die erzielbare Durchschnittsleistung. Durch die Wahl eines geeigneten Modulationsverfahrens wie beispielsweise QPSK (Quadrature Phase Shift Keying) lässt sich das PAPR reduzieren.

Die Filterfunktion kann durch Änderung des Roll-off-Faktors α angepasst werden. Der Roll-off-Faktor α stellt einen Parameter des Filters dar und kann in den Grenzen 0≤α≤1 variiert werden. Mit wachsendem Roll-off-Faktor α nimmt die Bandbreite des Filters zu. In der Praxis findet oftmals ein Roll-off-Faktor α von 0.2 bis 0.5 Anwendung. Der Roll-off-Faktor α wird erläutert z.B. in der Technischen Spezifikation 3GPP TS 25.101 (3rd Generation Partnership Project; Technical Specification Group Radio Access Network; User Equipment (UE) radio transmission and reception (FDD)), Kapitel 6.8.1.

Figur 2 zeigt den Verlauf einer Filterfunktion für einen Roll-off-Faktor α = 0, entsprechend dem senkrechten Anstieg der Funktion an den Subband-Grenzen, und weiterhin für einen Roll-off-Faktor α>0, entsprechend dem abgeflachten Anstieg. Aus dieser Darstellung ist ersichtlich, dass bei Verwendung eines Roll-off-Faktors α>0 für das Subband SB2 die Signalübertragung in den benachbarten Subbändern SB1 und SB3 gestört wird, denn der für das Subband SB2 vorgesehen Spektrumsausschnitt ist in den Bereich der Subbänder SB1 und SB3 hinein verbreitert. Somit wird ein Teil des Signals des Subbands SB2 auf den Subbändern SB1 und SB3 übertragen. Werden auf benachbarten Subbändern gleichzeitig Signale übertragen, wobei jeweils oder zumindest für eines der beiden benachbarten Subbänder ein Roll-off-Faktor α*>*0 eingesetzt wird, kommt es zu unerwünschter Nachbarkanalinterferenz.

Wie bereits erwähnt weist die Verwendung von Filtern den Vorteil auf, dass das PAPR reduziert wird. Von Nachteil hingegen ist, dass durch den Einsatz des Filters wie anhand von Figur 2 erläutert die Spektrumseffizienz reduziert wird, d.h. zum Erreichen einer bestimmten Übertragungsrate wird bei Einsatz eines Filters mehr Frequenzspektrum benötigt als ohne Filterung. Das durch die Spektrumsverbreiterung hervorgerufene Problem ist, dass durch das breitere Spektrum das Signal eines Senders, welcher in dem benachbarten Subband sendet, gestört wird. Das optimale Filter auf der Seite des Empfängers ist gemäß dem matched filter Ansatz wie auch das Sendefilter verbreitert, so dass dem Empfänger eine Überlagerung von Signalen verschiedener Sender vorliegt.

Die Filterbandbreite und somit insbesondere der Roll-off-Faktor α wird der Nachbarkanalbelegung angepasst. So eignet sich die Verwendung einer engen Filterung, d.h. eines Roll-off-Faktors *α*≈0 für den Fall, dass die benachbarten Subbänder belegt sind. Wenn hingegen die benachbarten Subbänder frei sind, d.h. nicht zur Signalübertragung verwendet werden, ist die Verwendung eines größeren Roll-off-Faktors vorteilhaft. Denn hierdurch kann das PAPR reduziert werden, ohne dass ein nachteiliger Effekt hinsichtlich der Nachbarkanalinterferenz auftritt.

Der Teilnehmerstation UE sei das Subband SB2 zur Versendung von Signalen an die netzseitige Funkstation NodeB zugewiesen. Alternativ kann der Teilnehmerstation UE eine Mehrzahl von benachbarten Subbändern, manchmal als "chunk" bezeichnet, zugewiesen sein. Z.B. kann ein chunk aus einem Block von drei zusammenhängenden Subbändern bestehen. In der Regel bedeutet die Verwendung von chunks, dass ein chunk die kleinste Einheit von Funkressourcen ist, welche einer Teilnehmerstation zugewiesen werden kann. Wird anstelle des einzelnen Subbandes SB2 daher ein chunk zugewiesen, handelt es sich bei den in Figur 2 als einzelne Subbänder SB1 und SB3 dargestellte Frequenzabschnitte vorzugsweise auch um chunks. Die folgenden auf die Zuweisung des einzelnen Subbandes SB2 bezogenen Ausführungen gelten entsprechend auch für die Zuweisung eines chunks. In beiden Fällen, also der Zuweisung eines einzelnen Subbandes oder der Zuweisung einer Mehrzahl benachbarter Subbänder, werden die Filtercharakteristika an den Subbandgrenzen zwischen einem der Teilnehmerstation UE und einem von einer anderen Teilnehmerstation belegten Subband angepasst.

Die Filtercharakteristika, welche die Teilnehmerstation UE bei der Bearbeitung von zu versendenden Signalen anwendet, werden abhängig davon gewählt, ob die Subbänder SB1 und SB3 belegt sind, d.h. ob sie aktuell anderen Teilnehmerstationen zur Signalversendung zugewiesen sind. Sind die Subbänder SB1 und SB3 frei bzw. nicht belegt, wird durch die Verwendung eines Roll-off-Faktors α>0 eine Spektrumsverbreiterung für das Subband SB2 in die Bereiche der Subbänder SB1 und SB3 durchgeführt. Hierdurch wird die Übertragung insbesondere in der Situation verbessert, in welcher sich die Teilnehmerstation UE an ihrer Sendeleistungsgrenze befindet.

Sind hingegen die benachbarten Subbänder SB1 und SB3 aktuell belegt, muss ein Kompromiss zwischen dem PAPR der Teilnehmerstation UE und der durch eine Spektrumsverbreiterung hervorgerufenen Interferenz gefunden werden. Daher wird im Falle von belegten Nachbarsubbändern ein niedrigerer Wert für den Roll-off-Faktor α verwendet als bei unbelegten Nachbarsubbändern. Hierdurch wird zwar das PAPR im Vergleich zu unbelegten Nachbarsubbändern erhöht, jedoch verringert dies die Interferenz zwischen den Signalen des Subbandes SB2 und der Subbänder SB1 und SB3. Auf diese Weise kann eine an die aktuelle Situation angepasste Übertragungsart gewählt werden.

Ist das Subband SB1 belegt, während das Subband SB3 frei ist, kann der Roll-off-Faktor α für die beiden Subbandgrenzen unterschiedlich eingestellt werden: für die Grenze zwischen den Subbändern SB1 und SB2 wird ein kleiner Wert des Roll-off-Faktors α gewählt und für die Grenze zwischen den Subbändern SB2 und SB3 ein größerer. In diesem Fall der individuellen Einstellung der Spektrumsverbreiterung an der oberen und der unteren Frequenzgrenze ergibt sich - im Gegensatz zum symmetrischen Verlauf der Figur 2 - ein asymmetrischer Verlauf der Filterkurve.

Die Teilnehmerstation UE kann eine Zuordnungstabelle verwenden, um über die zu verwendende Filterung zu entscheiden. Als Regel kann beispielsweise eingesetzt werden: α=0.14 bei Nicht-Belegung des jeweiligen Nachbarsubbandes und α=0.07 bei Belegung des jeweiligen Nachbarsubbandes. Wenn diese Zuordnungstabelle der netzseitigen Funkstation NodeB bekannt ist, kann ein von der netzseitigen Funkstation NodeB verwendetes angepasstes Filter (englisch: matched filter) optimal eingestellt werden.

Um festzustellen, ob die benachbarten Subbänder belegt sind, beobachtet die Teilnehmerstation UE die von der netzseitigen Funkstation NodeB versendeten Funkressourcenzuweisungen. Hierzu versendet die netzseitige Funkstation NodeB diese scheduling Informationen derart, dass nicht nur die direkt von der Zuweisung betroffene Teilnehmerstation, sondern zumindest auch die Teilnehmerstationen, welchen benachbarte Subbänder zugewiesen sind, die scheduling Informationen empfangen und auswerten können.

Die Kanalzuweisungen aller Teilnehmerstationen können beispielsweise von der netzseitigen Funkstation NodeB gemeinsam kodiert werden, so dass jeder Teilnehmerstation nach der Dekodierung zur Ermittlung ihrer eigenen Funkressourcenzuweisung alle Kanalzuweisungen bekannt sind. Die Kodierung nicht nur der Kanalzuweisung für eine einzelne Teilnehmerstation, sondern für mehrere Teilnehmerstationen gemeinsam ist überdies vorteilhaft, da durch die hierdurch gesteigerte Menge zu kodierender Bits die Verwendung effizienterer Kodierungsverfahren ermöglicht wird, wie z.B. die Verwendung der Turbo-Kodierung.

Es ist allerdings nicht notwendig, dass alle Teilnehmerstationen über alle Funkressourcenzuweisungen von anderen Teilnehmerstationen informiert werden; für die Auswahl der anzuwendenden Spektrumsverbreiterung sind lediglich die benachbarten Subbänder relevant. Daher ist es ausreichend, einen Teil der Kanalzuweisungen gemeinsam zu kodieren. Hierzu können Teilnehmerstationen, welchen benachbarte Subbänder zugewiesen werden, in Gruppen zusammengefasst werden, wobei die scheduling Informationen für jeweils eine Gruppe gemeinsam kodiert werden.

Weiterhin ist es möglich, dass der Teilnehmerstation UE explizit von der netzseitigen Funkstation NodeB signalisiert wird, ob die zu ihrem Subband SB2 benachbarten Subbänder SB1 und SB3 belegt oder frei sind. Diese explizite Signalisierung kann der Teilnehmerstation UE z.B. zusammen mit der Zuweisung der Subbandes SB2 gesendet werden. Bei Verwendung der expliziten Signalisierung kann darauf verzichtet werden, dass die Teilnehmerstation UE die Kanalzuweisungen anderer Teilnehmerstationen auswertet.

Auch eine Kombination der beiden vorgestellten Verfahren zur Information der Teilnehmerstation UE über die Belegung der benachbarten Subbänder ist möglich. Beispielsweise kann die Teilnehmerstation UE den Kanalzuweisungen von anderen Teilnehmerstationen entnehmen, dass das Subband SB1 belegt ist, während die netzseitige Funkstation NodeB der Teilnehmerstation UE explizit mitteilt, dass das Subband SB3 frei ist. Durch dieses effiziente Verfahren zur Information über die Belegung von benachbarten Subbändern entsteht lediglich ein geringer zusätzlicher Signalisierungsaufwand, welcher zur Entscheidung über die zu verwendenden Filtercharakteristika nötig ist.

Es wurde die Vorgehensweise beschrieben, wonach die Teilnehmerstation UE von der netzseitigen Funkstation NodeB entweder implizit durch die Kanalzuweisungen an andere Teilnehmerstationen oder explizit durch eine eigens für die Teilnehmerstation UE bestimmte Nachricht über die Belegung der benachbarten Subbänder SB1 und SB3 unterrichtet wird. Aus der Kenntnis der Nachbarkanalbelegung ermittelt die Teilnehmerstation UE im Anschluss die zu verwendenden Filtercharakteristika, wobei vorzugsweise eine der netzseitigen Funkstation NodeB bekannte Zuordnungsvorschrift zum Einsatz kommt. Alternativ hierzu kann die netzseitige Funkstation NodeB die Teilnehmerstation UE direkt über die zu verwendenden Filtercharakteristika informieren, z.B. zusammen mit der Zuweisung des Subbandes SB2 an die Teilnehmerstation UE. Die netzseitige Funkstation NodeB kann eine effiziente Entscheidung über die von den verschiedenen Teilnehmerstationen anzuwendende Spektrumsverbreiterungen treffen, da der netzseitige Funkstation NodeB im Rahmen der Verwaltung ihrer Funkressourcen die Funkressourcenverteilung und somit -belegung bekannt ist.

## Patentansprüche

1. Verfahren zur Kommunikation per Funk, bei dem
ein in eine Mehrzahl von Subbändern (SB1, SB2, SB3) aufgeteiltes Frequenzband verwendet wird,
Subbänder (SB1, SB2, SB3) von Funkstationen (NodeB, UE) zur Versendung von Signalen belegt sind,
eine Funkstation (NodeB, UE) vor der Versendung eines Signals eine Filterung unter Verwendung einer Filterfunktion durchführt und das Signal auf mindestens einem Subband (SB2) versendet,
**dadurch gekennzeichnet,**
**dass** ein Parameter (α) der Filterfunktion von der Belegung von mindestens einem dem mindestens einen Subband (SB2) benachbarten Subband (SB1, SB3) abhängt.

2. Verfahren nach Anspruch 1, bei dem
der Parameter (α) die Frequenzbereichs-Filterbandbreite bestimmt.

3. Verfahren nach Anspruch 2, bei dem
im Falle der Belegung des mindestens einen benachbarten Subbandes (SB1, SB3) eine kleinere Frequenzbereichs-Filterbandbreite verwendet wird als im Falle der Nicht-Belegung.

4. Verfahren nach Anspruch 2 oder 3, bei dem
im Falle der Belegung des mindestens einen benachbarten Subbandes (SB1, SB3) durch den Parameter (α) eine solche Frequenzbereichs-Filterbandbreite bestimmt wird, dass das Signal nicht unter Verwendung von Teilen des mindestens einen benachbarten Subbandes (SB1, SB3) versendet wird.

5. Verfahren nach einem der Ansprüche 2 bis 4, bei dem
im Falle der Nicht-Belegung des mindestens einen benachbarten Subbandes (SB1, SB3) durch den Parameter (α) eine solche Frequenzbereichs-Filterbandbreite bestimmt wird, dass das Signal unter Verwendung von Teilen des mindestens einen benachbarten Subbandes (SB1, SB3) versendet wird.

6. Verfahren nach einem der Ansprüche 1 bis 5, bei dem
der Parameter (α) von der Belegung des mindestens einen dem mindestens einen Subband (SB2) benachbarten Subbandes (SB1, SB3) durch mindestens eine andere Funkstation abhängt.

7. Verfahren nach einem der Ansprüche 1 bis 5, bei dem
der Parameter (α) von der Belegung des mindestens einen dem mindestens einen Subband (SB2) benachbarten Subbandes (SB1, SB3) durch die Funkstation (NodeB) abhängt.

8. Verfahren nach einem der Ansprüche 1 bis 7, bei dem
die Funkstation (UE) vor der Durchführung der Filterung Informationen betreffend die Belegung des mindestens einen benachbarten Subbandes (SB1, SB3) empfängt.

9. Verfahren nach Anspruch 8, bei dem
die Informationen eine Zuweisung des mindestens einen benachbarten Subbandes (SB1, SB3) an zumindest eine andere Funkstation betreffen.

10. Verfahren nach Anspruch 9, bei dem
die Informationen betreffend die Zuweisung des mindestens einen benachbarten Subbandes (SB1, SB3) an die zumindest eine andere Funkstation gemeinsam kodiert sind mit Informationen betreffend eine Zuweisung des mindestens einen Subbandes (SB2) an die Funkstation (UE).

11. Verfahren nach einem der Ansprüche 1 bis 10, bei dem
sich aufgrund der Abhängigkeit des Parameters (α) der Verlauf der Filterfunktion an einem Frequenzrand des mindestens einen Subbandes (SB2) von dem Verlauf der Filterfunktion an einem anderen Frequenzrand des mindestens einen Subbandes (SB2) unterscheidet.

12. Verfahren nach einem der Ansprüche 1 bis 11, bei dem
eine Veränderung des Parameters (α) in einer Veränderung des Verhältnisses der Spitzensendeleistung der Funkstation (NodeB, UE) zur durchschnittlichen Sendeleistung der Funkstation (NodeB, UE) resultiert.

13. Verfahren nach einem der Ansprüche 1 bis 12, bei dem
es sich bei dem mindestens einen Subband um eine Mehrzahl von im Frequenzbereich benachbarten Subbändern handelt.

14. Verfahren nach einem der Ansprüche 1 bis 13, bei dem
es sich bei der Funkstation (UE) um eine teilnehmerseitige Funkstation (UE) handelt.

15. Verfahren nach einem der Ansprüche 1 bis 13, bei dem
es sich bei der Funkstation (NodeB) um eine netzseitige Funkstation (NodeB) handelt.

16. Verfahren nach einem der Ansprüche 1 bis 15, bei dem
es sich bei dem Filter um einen Root Raised Cosine Filter handelt.

17. Funkstation (NodeB, UE) zur Kommunikation per Funk, mit Mitteln zum Kommunizieren unter Verwendung eines in eine Mehrzahl von Subbändern (SB1, SB2, SB3) aufgeteilten Frequenzbandes,
Mitteln zum Belegen von Subbändern (SB1, SB2, SB3) zur Versendung von Signalen,
Mitteln zum Durchführen vor der Versendung eines Signals einer Filterung unter Verwendung einer Filterfunktion, Mitteln zum Versenden das Signals auf mindestens einem Subband (SB2),
**gekennzeichnet durch**
Mittel zum Verwenden eines Parameter (α) der Filterfunktion abhängig von der Belegung von mindestens einem dem mindestens einen Subband (SB2) benachbarten Subband (SB1, SB3).
